(19) **Europäisches Patentamt**

**European Patent Office**

**Office européen des brevets**

(11) Veröffentlichungsnummer: **0 307 530 B1**

(12) **EUROPÄISCHE PATENTSCHRIFT**

(45) Veröffentlichungstag der Patentschrift: **13.05.92**

(21) Anmeldenummer: **87890212.1**

(22) Anmeldetag: **14.09.87**

(51) Int. Cl.⁵: **G01N 30/60**, G01N 30/88

(54) **Kapillarchromatographievorrichtung und Verfahren zu ihrer Herstellung.**

(43) Veröffentlichungstag der Anmeldung:
**22.03.89 Patentblatt 89/12**

(45) Bekanntmachung des Hinweises auf die
Patenterteilung:
**13.05.92 Patentblatt 92/20**

(84) Benannte Vertragsstaaten:
**BE CH DE FR GB IT LI NL SE**

(56) Entgegenhaltungen:
**US-A- 3 149 941**
**US-A- 3 538 744**
**US-A- 4 471 647**

**SCIENTIFIC AMERICAN, Band 248, Nr. 4, April 1983, Seiten 36-47; J.B. ANGELL et al.: "Silicon Micromechanical Devices"**

**PATENT ABSTRACTS OF JAPAN, Band 10, Nr. 358 (P-255)(2415) 2. Dezember 1986;& JP - A - 61 155 858**

**PATENT ABSTRACTS OF JAPAN, Band 11, Nr. 72 (P-554)[2519] 5. März 1987;& JP - A - 61 233 366**

(73) Patentinhaber: **OttoSensors Corporation**
**11000 Cedar Avenue**
**Cleveland Ohio 44106(US)**

(72) Erfinder: **Prohaska, Otto, Dipl.Ing., Dr.**
**2107 Coventry Road**
**Cleveland Heights, Ohio 44118(US)**

(74) Vertreter: **Wildhack, Helmut, Dr. Dipl.-Ing. et al**
**Patentanwälte Dipl.-Ing. Leo Brauneiss**
**Dipl.-Ing. Dr. Helmut Wildhack Landstrasser**
**Hauptstrasse 50 Postfach 281**
**A-1031 Wien(AT)**

**Beschreibung**

Die Erfindung betrifft ein Verfahren zur Herstellung einer Kapillarchromatographievorrichtung mit zumindest einem Meßsensor, die mindestens eine zwischen einer Träger- und einer Deckschicht ausgebildete Kapillarsäule mit zumindest einer Zufuhr- und zumindest einer Austrittsöffnung für eine mobile Phase und/oder Meßgut besitzt. Ferner betrifft die Erfindung eine Kapillarchromatographievorrichtung mit zumindest einem Meßsensor, bei der die Kapillarsäulen mit Zufuhr- und Austrittsöffnungen sowie gegebenenfalls vorhandenen Zufuhr-, Austritts- oder Detektorkammern zwischen einer Trägerschicht und einer auf diese aufgebrachten Deckschicht ausgebildet sind.

Derartige Herstellungsverfahren und Vorrichtungen sind aus Scientific American, Band 248, Nr.4, April 1983, Seiten 36-47; J.B. Angeli et al.: "Silicon Micromechanical Devices" sowie der US-A 4 471 647 und US-A 3 538 744 bekannt. In jedem Fall erfolgt die Ausbildung der Kapillarsäule durch Ätztechniken in entsprechenden Substraten.

Ziel der Erfindung ist es, ein Verfahren anzugeben, mit dem Kapillarchromatographievorrichtungen in einfacher Weise in großen Stückzahlen und insbesondere komplexem Aufbau herzustellen sind. Dies wird bei einem Verfahren der eingangs genannten Art dadurch erreicht, daß auf dem als Trägerschicht dienenden Substrat eine lösliche Substanz, vorzugsweise Photolack, aufgebracht wird, und zwar in einer Form, die dem Verlauf der Kapillarsäule(n) sowie dem Verlauf von gegebenenfalls vorhandenen Zufuhr-, Austritts- oder Detektorkammern entspricht, daß auf das Substrat und die lösliche Substanz die Deckschicht in einer Dicke von mehr als 0,5 $\mu$m aufgebracht wird, und daß danach die lösliche Substanz durch die Zufuhr- bzw. Austrittsöffnungen herausgelöst wird, wobei die von den Aufwölbungen der Deckschichten begrenzten Hohlräume zwischen dem Substrat und der Deckschicht die Kapillarsäulen bzw. die gegebenenfalls vorhandenen Zufuhr-, Austritts- oder Detektorkammern für die mobile Phase und/oder das Meßgut darstellen. Der wesentliche Vorteil des erfindungsgemäßen Verfahrens besteht darin, daß kein Ätzen erforderlich ist, sondern eine für die Chromatographie verwendbare Konfiguration durch Beschichtung von nahezu beliebig wählbaren Trägerschichten mit einer Reihe von auswählbaren Deckschichten erstellt werden kann. Sowohl das Substrat, insbesondere aber die Deckschicht, kann um zumindest eine Größenordnung dünner sein als die mit bekannten Verfahren ausgebildeten Schichten, was neue Einsatzmöglichkeiten bietet. Überdies ist es möglich, durch Beschichten komplizierte Formen auszubilden, die durch Ätzen bzw. mechanische Bearbeitung nicht herstellbar sind. Vorteilhaft ist es jedoch, wenn vor Aufbringen der löslichen Substanz auf das Substrat dem Verlauf der Kapillarsäulen entsprechende Vertiefungen aus dem die Trägerschicht bildenden Substrat herausgeätzt werden, da damit der Querschnitt der Kapillarsäule vergrößert werden kann.

Im Hinblick auf den Aufbau und den Einsatz ist es vorteilhaft, wenn erfindungsgemäß die Kapillarsäule eine Breite von weniger als 1 $\mu$m bis 1 mm, insbesondere von 0,5 $\mu$m bis 20 $\mu$m, und eine Höhe von 0,5 $\mu$m bis 1 mm, insbesondere von 0,5 bis 3 $\mu$m, hat bzw. wenn die Deckschicht in einer Dicke von 0,5 bis 20 $\mu$m, vorzugsweise 3 $\mu$m, gegebenenfalls aber auch bis zu einer Dicke von 1 mm, aufgebracht wird bzw. wenn die Deckschicht aufgedampft und/oder aufgesputtert und/oder mittels PCVD (plasma enhanced chemical vapour deposition)-Methoden und/oder elektrolytisch aufgebracht wird.

Zu bemerken ist, daß die Dicke der Deckschicht sowie die Breite und Höhe der Kapillarsäulen die angegebenen Werte in Bedarfs- bzw. Sonderfällen auch überschreiten kann.

Eine Kapillarchromatographievorrichtung der eingangs genannten Art ist erfindungsgemäß dadurch gekennzeichnet, daß die Deckschicht, die auf die Oberfläche des die Trägerschicht bildenden Substrates sowie auf eine lösliche, auf das Substrat in der Form der Kapillarsäulen sowie Zufuhr-, Austritts- bzw. Detektorkammern aufgebrachte Substanz, z.B. Photolack, aufgebracht ist, nach dem Herauslösen der löslichen Substanz die Kapillarsäulen und gegebenenfalls die Zufuhr-, Austritts bzw. Detektorkammern begrenzende Aufwölbungen besitzt bzw. diesen entsprechende Hohlräume umschließt, und daß die Deckschicht eine Wandstärke von zumindest 0,5 $\mu$m und die Kapillarsäulen Abmessungen von etwa 1 $\mu$m bis etwa 1 mm für die kleineren und von 1 $\mu$m bis 20 $\mu$m für die größeren Seiten aufweisen, wobei die Meßsensoren von elektrochemischen und/oder Reaktionsdetektoren und/oder UV-, Fluoreszenz- bzw. Refraktionsdetektoren und/oder Massenspektrometem gebildet sind. Es wird ein Produkt erreicht, das mit größter Genauigkeit aufgebaut werden kann, da es besonders einfach ist, die Innenwände der Kapillarröhren als aufgedampfte Beläge auszubilden, die von der Deckschicht umschlossen sind. Dadurch, daß die Kapillarsäulen in ihrer Form nahezu beliebig gestaltet, verzweigt, vereint usw. werden können, wird es möglich, allen Umständen angepaßte Chromatographieeinrichtungen zu bauen, was durch Ätzen ausgesprochen schwierig bzw. unmöglich wäre.

Derartige Kapillarchromatographievorrichtungen dienen insbesondere für die Flüssigchromatographie. Am Ende der Kapillarsäule kann das Detektorsystem vorzugsweise als elektrochemische und/oder Reaktionsdetektoren, beispielsweise in Form von Meßkammern integriert sein, so daß die mobile Phase Meßgut durch eine Austrittsöffnung abgeführt werden kann. Bei einer bevorzugten Ausführungsform der Erfindung ist vorgesehen, daß die Meßsensoren in den Kapillarsäulen angeordnet sind bzw. in diese integriert sind. Dadurch werden Totzeiten verringert. Je nach dem Einsatzzweck kann es vorteilhaft sein, wenn die Kapillarsäulen auf dem isolierenden Substrat meanderförmig, spiralförmig, doppelhelixförmig oder bifilar geführt sind und/oder der Kapillarsäulenquerschnitt über die Länge der Kapillarsäule stetig oder unstetig verändert ist und/oder die Kapillarsäule aus einer Gruppe parallel, neben und/oder übereinander laufender Kapillarsäulen besteht und/oder Verzweigungen der einzelnen Säulen und/oder Konvergenzen aus mehreren Säulen und/oder Verbindungen der Säulen untereinander zur Mischung bzw. Trennung von Meßgut und/oder mobiler Phase aufweist. Damit können lange Kapillarsäulen auf kleinem Raum erstellt und an verschiedene Meßbedingungen angepaßt werden.

Platzsparend ist es, wenn mindestens zwei Detektorsysteme hintereinander geschaltet sind oder mindestens zwei Kapillarchromatographievorrichtungen auf einem isolierenden Substrat integriert sind oder wenn mindestens zwei integrierte Kapillarchromatographievorrichtungen hintereinander geschaltet sind.

Es kann ferner erfindungsgemäß für den Einsatz bei speziellen Messungen vorgesehen sein, daß Kapillarsäulen, die von mindestens zwei verschiedenen Zufuhröffnungen bzw. -kammern gespeist sind, in eine Kapillarsäule konvergieren und/oder daß die von einer Zufuhröffnung bzw. -kammer gespeisten Kapillarsäulen verzweigt sind und in mindestens zwei Detektorsysteme geführt sind.

Der besondere Vorteil der erfindungsgemäßen Kapillarchromatographievorrichtung besteht darin, daß sie nicht nur in kompakter Form und kostengünstig mit dünnschichttechnologischen Methoden herstellbar ist, sondern vor allem Kapillarsäulen extrem kleiner Querschnittsdimensionen in μm-Größenordnung mit exakter Reproduzierbarkeit und hoher Genauigkeit aufweist - insbesondere gegenüber herkömmlichen Bauweisen (siehe J.C.Giddings, J.P.Chang, M.N.Myers, J.M.Davis, K.D. Caldwell: Capillary liquid chromatography in field flow fraction-action-type channels, J.Chromatography, 255 (1983), 359-379). Theoretische Überlegungen zeigten, daß Kapillarsäulen mit μm-Querschnittsdimensionen außerordentlich hohe Trennleistungen bei extrem kurzen Retentionszeiten aufweisen (J.H.Knox: Theoretical aspects of LC with packed and open small-bore columns, J. Chromatographic Sci. 18 (1980), 453-461). Dadurch erreicht man nicht nur höhere Auflösung und Meßgenauigkeit sondern auch wesentliche Zeitersparnis bei Verwendung dieser integrierten Kapillarchromatographievorrichtung. Untersuchungen an dünnen Glaskapillarröhren bestätigen die Aussage (J.W. Jorgenson, E.J. Guthrie: Liquid chromatography in open-tubular columns J. Chromatography, 255 (1983), 335-348).

Ein wesentlicher weiterer Vorteil gegenüber bekannten Vorrichtungen ist es, daß die Kapillarsäulen ebenso wie das Splitting-System und Detektorsystem durch eine Aufwölbung der sonst am isolierenden Substrat aufliegenden und fest haftenden isolierenden Schicht gegenüber dem Substrat gebildet werden, wodurch in einem Herstellungsschritt nicht nur die gesamte Kapillarchromatographievorrichtungerstellt sondern auch zuverlässig abgedichtet werden kann. Dabei wird die Kapillarchromatographievorrichtung zunächst in ihrer Gestalt durch eine lösliche Substanz, vorzugsweise Photolack, hergestellt, positioniert über den Detektoren bzw. Detektoranschlüssen, und mit der isolierenden Schicht, vorzugsweise $SiO_2$, $SiO_x$, $Si_3O_4$, $SiO_xN_y$, $TiO_2$, $Ta_2O_5$ od.dgl. Stoffen überzogen; danach wird in einfacher Weise die lösliche Substanz über die Einfüll-, Abfluß- und Austrittsöffnungen herausgelöst.

Ein weiterer Vorteil der erfindungsgemäßen Kapillarchromatographievorrichtung besteht darin, daß die Innenwände der Kapillarsäulen mit polaren und/oder unpolaren Belägen, wie z.B. Aluminiumoxid, Kohlenstoff etc., ausgekleidet werden können, wodurch eine zusätzliche Trennleistung erreichbar ist.

Ein zusätzlicher Vorteil ergibt sich aus der gegenständlichen Erfindung durch die außerordentliche Variabilität der Gestaltung der Kapillarsäulen sowohl hinsichtlich des Querschnitts als auch der Anordnung: durch Querschnittsänderungen sowohl als auch Parallelführung von Kapillarsäulen, wobei die Säulen sich verzweigen oder konvergieren sowie untereinander verbunden sein können, werden weitere Trenn- und Auflösungseffekte erreicht, wie sie mit den herkömmlichen Systemen und Anordnungen nicht erreichbar sind. Die Kombination von mehreren Kapillarchromatographievorrichtungen, die auf einem Substrat integrierbar sind und untereinander verbunden sind, erlaubt beispielsweise die Zugabe von mobilen Phasen und/oder von Meßgut zu beliebigen Zeiten und Positionen in einer Kapillarsäule, wodurch das Einsatzspektrum der erfindungsgemäßen Kapillarchromatographievorrichtung noch breiter ist.

Im folgenden wird die Erfindung anhand der Zeichnung näher erläutert. Es zeigen: Fig. 1a eine Kapillarchromatographievorrichtung schematisch in Draufsicht, Fig. 1b eine Kapillarchromatographievorrichtung schematisch im Längsschnitt, Fig. 2a eine als Säulensystem ausgelegte Kapillarsäule, Fig. 2b Kapillarsäulen im Querschnitt, Fig. 3a,b,c und d verschiedene Ausführungsformen von Kapillarsäulen und Fig. 4 eine Kombination von mehreren Kapillarchromatographievorrichtungen.

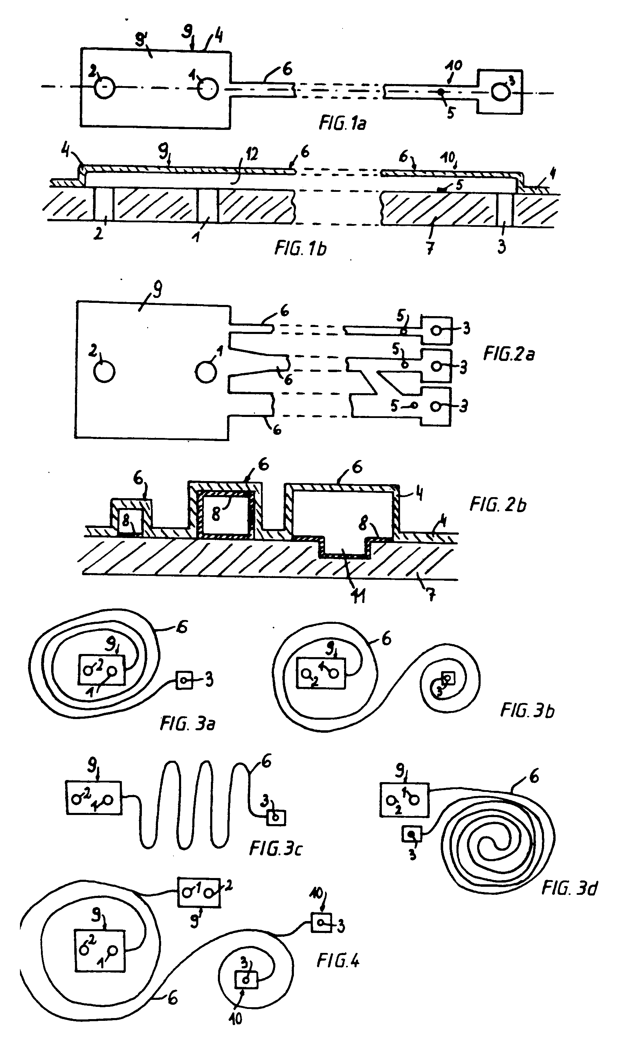

Fig. 1a zeigt eine integrierte Kapillarchromatographievorrichtung schematisch in Aufsicht und Fig. 1b im Querschnitt.

Eine isolierende Schicht bzw. Deckschicht 4 ist derartig aufgewölbt auf einem Substrat 7 aufgebracht, daß mindestens eine Kapillarsäule 6 zwischen der Deckschicht 4 und dem Substrat 7 gebildet wird. Die Deckschicht 4 bildet mit dem Substrat 7 auch ein Splitting-System bzw. eine Aufteilungseinrichtung 9, die bewirkt, daß die mobile Phase und/oder das Meßgut 12 durch eine Einfüllöffnung 1, die vorzugsweise durch das Substrat 7 führt, eintreten und teilweise in die Kapillarsäule 6 gelangen sowie teilweise durch eine Abflußöffnung 2, die vorzugsweise durch das Substrat 7 führt, wieder austreten kann. Diese Aufteilungseinrichtung 9 ist hilfreich bei der Bemessung der sehr kleinen Meßgutmengen von der Größenordnung von einigen Nanolitern. Ebenso wird vorzugsweise durch die isolierende Deckschicht 4 ein Detektorsystem 10 in Form von Meßkammern gebildet bzw. eingegrenzt, die Sensoren 5 umfassen. Durch eine Austrittsöffnung 3, die vorzugsweise durch das Substrat 7 führt, werden die mobile Phase und/oder das Meßgut 12 abgeführt.

Für die Herstellung der erfindungsgemäßen Kapillarsäulenchromatographievorrichtung werden u.a. technologische Prozesse und Materialien verwendet, wie sie in ähnlicher Form, jedoch mit anderen Verfahrensparametern, für die Herstellung von integrierten Schaltungen oder Dünnschichtsonden entwickelt wurden, die ihrerseits wieder in vorteilhafter Weise im vorliegenden Fall als Detektorsystem 10 oder als elektrochemische und/oder Reaktionssensoren 5 Einsatz finden können bzw. integrierbar sind, wodurch die Messung beträchtlich vereinfacht werden kann. Ebenfalls in die erfindungsgemäße Kapillarchromatographievorrichtung integrierbar ist das totzeitverringernde Splitting-System 9, das mit Hilfe der selben isolierenden Deckschicht 4 herstellbar ist, aus der die Kapillarsäulen 6 gemeinsam mit dem Substrat 7 gebildet werden. Das Splitting-System 9 kann in einem Herstellungsschritt mit den Kapillarsäulen 6 und dem Detektorsystem 10 erstellt werden, wobei das Splitting-System 9 das Füllen der Kapillarsäulen 6 wesentlich erleichtert dadurch, daß das zu analysierende Meßgut 12 bei der Einfüllöffnung 1 eintritt und einerseits über die Kapillarsäulen 6 zu den Sensoren 5 gelangt und durch die Austrittsöffnung 3 wieder abgeführt wird und anderseits durch einen breiten Splitting-Kanal 9′ wieder durch die Abflußöffnung 2 austreten kann, ohne durch die Kapillarsäule 6 oder das Detektorsystem 10 geführt zu werden.

Fig. 2b zeigt die vorzugsweise rechteckförmigen Querschnittsformen der Kapillarsäule 6, die dadurch gebildet werden, daß die auf dem isolierenden Substrat 7 aufgebrachte isolierende Deckschicht 4 aufgewölbt geführt ist. Zur Erhöhung der Trennleistung können die Kapillarsäulen 6 innen zumindest teilweise mit polaren und/oder unpolaren Belägen 8 ausgekleidet werden. Vertiefende bzw. die Kapillarsäulen 6 vergrößernde Rillen 11, die z.B. im Substrat 7 ausgeätzt sind, können den Querschnitt der Kapillarsäulen 6 vergrößern; die Querschnittsdimensionen können vom Submicrometerbereich bis zu Millimeterwerten reichen. Die Untergrenze hängt im wesentlichen von den Materialparametern ab und kann z.B. auch 0,1 $\mu$m oder 0,05 $\mu$m sein. Diese Grenzen gelten sowohl für die Abmessungen der Kapillarsäule als auch die Dicke der Deckschicht. Nach oben zu werden die Grenzen durch die vernünftige Bedienbarkeit und den Einsatzzweck gezogen.

Die Kapillarsäulenführung kann zur Erhöhung der Säulenlänge bei gleichzeitiger Platzersparnis z.B. meanderförmig, spiralförmig, doppelhelixförmig oder bifilar auf dem isolierenden Substrat 7 erfolgen. Beispiele hiefür sind in den Fig. 3a, b, c und d dargestellt. Der Kapillarsäulenquerschnitt kann dabei über die ganze Länge konstant gehalten oder kontinuierlich und/oder unstetig geändert werden. Fig. 2a zeigt, daß die Kapillarsäule 6 auch als Säulensystem ausgelegt sein kann, das parallel laufende Säulen aufweist und/oder Verzweigungen der einzelnen Säulen und/oder Konvergenzen aus mehreren Säulen und/oder Verbindungen der Säulen untereinander aufweist, wodurch zusätzlich Misch- oder Trenneffekte erzielt werden können.

Eine Kombination von mehreren Kapillarchromatographievorrichtungen, vorzugsweise durch Integration auf dem isolierenden Substrat 7, ist in Fig. 4 beispielshaft dargestellt, gemäß der die Kapillarsäule 6 aus mehreren Splitting-Systemen 9 versorgt wird und/oder in verschiedenen Detektorsystemen 10 endet. Dies erlaubt beispielsweise die Zugabe von mobilen Phasen und/oder Meßgut 12 zu beliebigen Zeiten und in beliebigen Positionen in einer Kapillarsäule 6 und erhöht den Verwendungsbereich der integrierten Kapillarchromatographievorrichtung beträchtlich.

**Patentansprüche**

1. Verfahren zur Herstellung einer Kapillarchromatographievorrichtung mit zumindest einem Meßsensor, die mindestens eine zwischen einer Träger- und einer Deckschicht ausgebildete Kapillarsäule mit zumindest einer Zufuhr- und zumindest einer Austrittsöffnung für eine mobile Phase und/oder Meßgut besitzt, dadurch gekennzeichnet, daß auf dem als Trägerschicht dienenden Substrat eine lösliche Substanz, vorzugsweise Photolack, aufgebracht wird, und zwar in einer Form, die dem Verlauf der Kapillarsäule(n) sowie dem Verlauf von gegebenenfalls vorhandenen Zufuhr-, Austritts- oder Detektorkammern entspricht, daß auf das Substrat und die lösliche Substanz die Deckschicht in einer Dicke von mehr als 0,5 $\mu$m aufgebracht wird, und daß danach die lösliche Substanz durch die Zufuhrbzw. Austrittsöffnungen herausgelöst wird, wobei die von den Aufwölbungen der Deckschichten begrenzten Hohlräume zwischen dem Substrat und der Deckschicht die Kapillarsäulen bzw. die gegebenenfalls vorhandenen Zufuhr-, Austritts- oder Detektorkammern für die mobile Phase und/oder das Meßgut darstellen.

2. Verfahren nach Anspruch 1, dadurch gekennzeichnet, daß die Kapillarsäule mit einer Breite von weniger als 1 $\mu$m bis 1 mm, insbesondere von 0,5 $\mu$m bis 20 $\mu$m, und einer Höhe von 0,5 $\mu$m bis 1 mm, insbesondere von 0,5 bis 3 $\mu$m, ausgebildet wird.

3. Verfahren nach Anspruch 1 oder 2, dadurch gekennzeichnet, daß die Deckschicht in einer Dicke von 0,5 bis 20 $\mu$m, vorzugsweise 3 $\mu$m, gegebenenfalls aber auch bis zu einer Dicke von 1 mm, aufgebracht wird.

4. Verfahren nach einem der Ansprüche 1 bis 3, dadurch gekennzeichnet, daß die Deckschicht aufgedampft und/oder aufgesputtert und/oder mittels PCVD (plasma enhanced chemical vapour deposition)-Methoden und/oder elektrolytisch aufgebracht wird.

5. Verfahren nach einem der Ansprüche 1 bis 4, dadurch gekennzeichnet, daß vor Aufbringen der löslichen Substanz auf das Substrat dem Verlauf der Kapillarsäulen entsprechende Vertiefungen aus dem die Trägerschicht bildenden Substrat herausgeätzt werden.

6. Kapillarchromatographievorrichtung mit zumindest einem Meßsensor, bei der die Kapillarsäulen mit Zufuhr- und Austrittsöffnungen sowie gegebenenfalls vorhandenen Zufuhr-, Austritts- oder Detektorkammern zwischen einer Trägerschicht und einer auf diese aufgebrachten Deckschicht ausgebildet sind, dadurch gekennzeichnet, daß die Deckschicht (4), die auf die Oberfläche des die Trägerschicht bildenden Substrates (7) sowie auf eine lösliche, auf das Substrat (7) in der Form der Kapillarsäulen sowie Zufuhr-, Austritts- bzw. Detektorkammern (10) aufgebrachte Substanz, z.B. Photolack, aufgebracht ist, nach dem Herauslösen der löslichen Substanz die Kapillarsäulen (6) und gegebenenfalls die Zufuhr-, Austritts- bzw. Detektorkammern (10) begrenzende Aufwölbungen besitzt bzw. diesen entsprechende Hohlräume umschließt, und daß die Deckschicht (4) eine Wandstärke von zumindest 0,5 $\mu$m und die Kapillarsäulen (6), vorzugsweise rechteckförmigen Querschnitts, Abmessungen von etwa 1 $\mu$m bis etwa 1 mm für die kleineren und von 1 $\mu$m bis 20 $\mu$m für die größeren Seiten aufweisen, wobei die Meßsensoren (5) von elektrochemischen und/oder Reaktionsdetektoren und/oder UV-, Fluoreszenz- bzw. Refraktionsdetektoren und/oder Massenspektrometern gebildet sind.

7. Vorrichtung nach Anspruch 6, dadurch gekennzeichnet, daß die Deckschicht (4) aufgedampft und/oder aufgesputtert und/oder mittels PCVD (plasma enhanced chemical vapour deposition)-Methoden und/oder elektrolytisch aufgebracht ist.

8. Vorrichtung nach Anspruch 6 oder 7, dadurch gekennzeichnet, daß die Deckschicht (4) aus $SiO_x$, $SiO_xN_y$, $TiO_x$, $Ta_xO_y$ besteht, wobei x zwischen 1 und 2 und y zwischen 1 und 5 variiert, oder aus anorganischen oder organischen Materialien bzw. Substanzen, z.B. Polymeren, besteht, die vergleichbare mechanische und/oder elektrische Eigenschaften besitzen.

9. Vorrichtung nach einem der Ansprüche 6 bis 8, dadurch gekennzeichnet, daß die Wandstärke der Deckschicht (4) 0,5 $\mu$m bis 20 $\mu$m, vorzugsweise 3 $\mu$m, gegebenenfalls auch bis zu 1 mm und mehr beträgt.

10. Vorrichtung nach einem der Ansprüche 6 bis 9, dadurch gekennzeichnet, daß die Kapillarsäulen (6) an den Innenwandflächen mit polaren und/oder unpolaren Belägen (8) ausgekleidet sind.

11. Vorrichtung nach einem der Ansprüche 6 bis 10, dadurch gekennzeichnet, daß die Abmessungen der vorzugsweise rechteckigen Querschnitt besitzenden Kapillarsäulen (6) 20 $\mu$m bis 100 $\mu$m, vorzugsweise 0,5 $\mu$m bis 3 $\mu$m, betragen.

**12.** Vorrichtung nach einem der Ansprüche 6 bis 11, dadurch gekennzeichnet, daß die Meßsensoren (5) in den Kapillarsäulen (6) angeordnet sind bzw. in diese integriert sind.

**13.** Vorrichtung nach einem der Ansprüche 6 bis 12, dadurch gekennzeichnet, daß die Kapillarsäulen (6) auf dem isolierenden Substrat (4) mäanderförmig, spiralförmig, doppelhelixförmig oder bifilar geführt sind.

**14.** Vorrichtung nach einem der Ansprüche 6 bis 13, dadurch gekennzeichnet, daß der Kapillarsäulenquerschnitt über die Länge der Kapillarsäule (6) stetig oder unstetig verändert ist.

**15.** Vorrichtung nach einem der Ansprüche 6 bis 14, dadurch gekennzeichnet, daß die Kapillarsäule (6) aus einer Gruppe parallel, neben und/oder übereinander laufender Kapillarsäulen (6) besteht und/oder Verzweigungen der einzelnen Säulen und/oder Konvergenzen aus mehreren Säulen und/oder Verbindungen der Säulen untereinander zur Mischung oder Trennung von Meßgut und/oder mobiler Phasen (12) aufweist.

**16.** Vorrichtung nach einem der Ansprüche 6 bis 15, dadurch gekennzeichnet, daß mindestens zwei Detektorsysteme (10) hintereinander geschaltet sind oder daß mindestens zwei Kapillarchromatographievorrichtungen auf einem isolierenden Substrat (7) integriert sind oder daß mindestens zwei integrierte Kapillarchromatographievorrichtungen hintereinander geschaltet sind.

**17.** Vorrichtung nach einem der Ansprüche 6 bis 16, dadurch gekennzeichnet, daß Kapillarsäulen (6), die von mindestens zwei verschiedenen Zufuröffnungen bzw. -kammern gespeist sind, in eine Kapillarsäule (6) konvergieren.

**18.** Vorrichtung nach einem der Ansprüche 6 bis 17, dadurch gekennzeichnet, daß die von einer Zufuröffnung bzw. -kammer gespeisten Kapillarsäulen (6) verzweigt sind und in mindestens zwei Detektorsysteme (10) geführt sind.

**19.** Vorrichtung nach einem der Ansprüche 6 bis 18, dadurch gekennzeichnet, daß im Substrat (7) dem Verlauf der die Kapillarsäulen (6) begrenzenden Aufwölbungen entsprechende Vertiefungen bzw. Rillen (11) ausgenommen bzw. ausgeätzt sind.

**Claims**

**1.** A process for the production of s capillary chromatography apparatus with at least one measuring sensor, having at least one capillary column formed between a supporting layer and a covering layer and at least one outlet orifice for a mobile phase and/or measuring stock, characterized in that a soluble substance, preferably photosensitive resist, is applied to the substrate serving as the supporting layer, namely, in a form corresponding to the course of the capillary column(s) as well as the course of optionally provided inlet, outlet or detector chambers, that the covering layer is applied to the substrate and the soluble substance in a thickness of more than 0.5 $\mu$m and that thereafter, the soluble substance is removed through the inlet or outlet orifices, the cavities between the substrate and the covering layer defined by the archings of the covering layer constituting the capillary columns and/or the optionally provided inlet, outlet or detector chambes for the mobile phase and/or the measuring stock.

**2.** The process according to claim 1, wherein the capillary column is formed with a width of less than 1 $\mu$m to 1 mm, in particular of 0.5 to 20 $\mu$m, and a height of 0.5 $\mu$m to 1 mm, in particular of 0.5 $\mu$m to 3 $\mu$m.

**3.** The process according to claim 1 or 2, wherein the covering layer is applied in a thickness of 0.5 $\mu$m to 20 $\mu$m, preferably of 3 $\mu$m, but optionally also up to a thickness of 1 mm.

**4.** The process according to any one of the claims 1 to 3, wherein the covering layer is applied by means of vacuum evaporation and/or sputtering and/or by means of PCVD (plasma-enhanced chemical vapor deposition) methods and/or electrolytically.

**5.** The process according to any one of the claims 1 to 4, wherein depressions corresponding to the course of the capillary columns are etched out of the substrate forming the supporting layer prior to the application of the soluble substance onto the substrate.

**6.** A capillary chromatography apparatus with at least one measuring sensor, wherein the capillary columns are formed with inlet and outlet orifices as well as optionally with inlet, outlet and detector chambers between a supporting layer and a covering layer applied thereon, characterized in that the covering layer (4), which is applied to the surface of the substrate (7) forming the supporting layer as well as to a soluble substance, for instance photosensitive resist, is provided with archings defining the capillary columns (6) and optionally the inlet, outlet and detector chambers (10) or enclosing cavities corresponding to said archings, and that the covering layer (4) has a wall thickness of at least 0.5 $\mu$m and the capillary columns (6) have dimensions of about 1 $\mu$m to about 1 mm for the smaller sides and of 1 $\mu$m to 20 $\mu$m for the larger sides, the measuring sensors (5) being formed by electrochemical and/or reaction detectors and/or ultraviolet, fluorescence or refraction detectors and/or mass spectrometers.

7. The apparatus according to claim 6, wherein the covering layer (4) is applied by means of vacuum evaporation and/or sputtering and/or by means of PCVD (plasma-enhanced chemical vapor deposition) methods and/or electrolytically.

8. The apparatus according to claim 6 or 7, wherein the covering layer (4) consists of $SiO_x$, $SiO_xNy$, $TiO_x$, $Ta_xO_y$, x varying between 1 and 2 and y varying between 1 and 5, or of inorganic or organic materials or substances, for instance of polymers, having comparable mechanical and/or electrical properties.

9. The apparatus according to any one of the claims 6 to 8, wherein the wall thickness of the covering layer (4) amounts to 0.5 $\mu$m to 20 $\mu$m, preferably to 3 $\mu$m, optionally also up to 1 mm and more.

10. The apparatus according to any one of the claims 6 to 9, wherein the capillary columns (6) are lined on their inner wall surfaces with polar and/or non-polar coatings (8).

11. The apparatus according to any one of the claims 6 to 10, wherein the dimensions of the capillary columns (6) preferably having rectangular cross sections amount to 20 $\mu$m to 100 $\mu$m, preferably 0.5 $\mu$m to 3 $\mu$m.

12. The apparatus according to any one of the claims 6 to 11, wherein the measuring sensors (5) are accommodated in the capillary columns (6) or integrated into them.

13. The appartus according to any one of the claims 6 to 12, wherein the capillary columns (6) are made to pass on the insulating substrate (4) in the form of meanders, helixes, double helixes or in bifilar form.

14. The apparatus according to any one of the claims 6 to 13, wherein the cross section of the capillary column is continuously or discontinuously changed over the length of the capillary column (6).

15. The apparatus according to any one of the claims 6 to 14, wherein the capillary column (6) consists of a group of capillary columns (6) extending parallel, side by side or superimposed in relation to one another and/or is provided with ramifications of the individual columns and/or convergences of several columns and/or interconnections of the columns with one another for mixing or separating measuring stock and/or mobile phases (12).

16. The apparatus according to any one of the claims 6 to 15, wherein at least two detector systems (10) are arranged in series one behind the other or at least two capillary chromatography apparatus are integrated on one insulating substrate (7) or at least two integrated capillary chromatography apparatus are arranged in series one behind the other.

17. The apparatus according to any one of the claims 6 to 16, wherein capillary columns (6) fed by at least two different inlet orifices or chambers converge in one capillary column (6).

18. The apparatus according to any one of the claims 6 to 17, wherein the capillary columns (6) fed by one inlet orifice or chamber are branched and passed in at least two detector systems (10).

19. The apparatus according to any one of the claims 6 to 18, wherein depressions or grooves (11) corresponding to the course of the archings defining the capillary columns (6) are recessed or etched out of the substrate (7)

**Revendications**

1. Procédé de fabrication d'un dispositif de chromatographie capillaire avec au moins un capteur de mesure, dispositif possédant au moins une colonne capillaire configurée entre une couche porteuse et une couche de couverture avec au moins une ouverture d'entrée et au moins une ouverture de sortie pour une phase mobile et/ou un produit à mesurer, dispositif caractérisé en ce qu'une substance soluble, de préférence une laque photosensible, est appliquée sur le substrat servant de couche porteuse, et plus précisément sous une forme correspondant au parcours de la (ou des) colonne(s) capillaire(s) ainsi qu'au parcours des chambres d'arrivée, de sortie ou de détection éventuellement présentes, et caractérisé en ce que la couche de couverture est appliquée sur le substrat et sur la substance soluble en une épaisseur supérieure à 0,5 $\mu$m, et en ce qu'ensuite la substance soluble est enlevée par solvant par les ouvertures d'entrée ou de sortie, tandis que les cavités délimitées par les parties bombées des couches de couverture, entre le substrat et la couche de couverture, constituent les colonnes capillaires ou les chambres d'entrée, de sortie ou de détection éventuellement présentes pour la phase mobile et/ou le produit à mesurer.

2. Procédé suivant revendication 1, caractérisé en ce que la colonne capillaire est configurée avec une largeur de moins de 1 $\mu$m à 1 mm, en particulier de 0,5 $\mu$m à 20 $\mu$m, et une hauteur de 0,5 $\mu$m à 1 mm, en particulier de 0,5 à 3 $\mu$m.

3. Procédé suivant revendication 1 ou 2, caractérisé en ce que la couche de couverture est déposée en une épaisseur de 0,5 à 20 $\mu$m, de préférence 3 $\mu$m, mais également le cas échéant jusqu'à une épaisseur de 1 mm.

4. Procédé suivant l'un des revendications 1 à 3, caractérisé en ce que la couche de couverture est déposée métallisée sous vide et/ou pulvérisée et/ou par les méthodes PCVD (plasma enhanced chemical vapour deposition) (= dépôt chimique en phase vapeur dans un plasma) et/ou par électrolyse.

5. Procédé suivant l'une des revendications 1 à 4, caractérisé en ce que, avant l'application de la substance soluble sur le substrat, on enlève, par attaque au réactif du substrat formant la couche porteuse, de la matière dans le but de former des creux sur le parcours des colonnes capillaires.

6. Dispositif de chromatographie capillaire avec au moins un capteur de mesure, dispositif sur lequel les colonnes capillaires sont configurées avec des ouvertures d'entrée et de sortie ainsi que des chambres d'entrée, de sortie ou de détection éventuellement présentes entre une couche porteuse et une couche de couverture appliquée sur cette couche porteuse, dispositif caractérisé en ce que la couche de couverture (4), qui est déposée sur la surface du substrat (7) formant la couche porteuse ainsi que sur une substance soluble, par exemple de la laque photosensible, appliquée sur le substrat (7) sous la forme de colonnes capillaires ainsi que de chambres d'entrée, de sortie ou de détection (10), après enlèvement de la substance soluble, possède des parties bombées délimitant les colonnes capillaires (6) et le cas échéant les chambres d'entrée, de sortie ou de détection (10) ou entoure des cavités correspondant à celles-ci, et dispositif caractérisé en ce que la couche de couverture (4) présente une épaisseur de paroi d'au moins 0,5 $\mu$m et les colonnes capillaires (6), de préférence de section rectangulaire, présentent des dimensions d'environ 1 $\mu$m à environ 1 mm pour les petits côtés et de 1 $\mu$m à 20 $\mu$m pour les grands côtés, les capteurs de mesure (5) étant formés par des détecteurs électrochimiques et/ou de réaction et/ou par des détecteurs à UV, à fluorescence ou à réfraction et/ou par des spectromètres de masse.

7. Dispositif suivant revendication 6, caractérisé en ce que la couche de couverture (4) est déposée métallisée sous vide et/ou pulvérisée et/ou par les méthodes PCVD (plasma enhanced chemical vapour deposition) (= dépôt chimique en phase vapeur dans un plasma) et/ou par électrolyse.

8. Dispositif suivant revendication 6 ou 7, caractérisé en ce que la couche de couverture (4) est réalisée en $SiO_x$, $SiO_xN_y$, $TiO_x$, $Ta_xO_y$, x variant entre 1 et 2 et y entre 1 et 5, ou dans des matières ou substances inorganiques ou organiques, par exemple polymères, qui possèdent des propriétés mécaniques et/ou électriques comparables.

9. Dispositif suivant l'une des revendications 6 à 8, caractérisé en ce que l'épaisseur de paroi de la couche de couverture (4) est de 0,5 $\mu$m à 20 $\mu$m, de préférence 3 $\mu$m, et peut atteindre le cas échéant également jusqu'à 1 mm et plus.

10. Dispositif suivant l'une des revendications 6 à 9, caractérisé en ce que les colonnes capillaires (6) sont garnies sur leurs surfaces intérieures de revêtements polaires et/ou non polaires (8).

**11.** Dispositif suivant l'une des revendications 6 à 10, caractérisé on ce que les dimensions des colonnes capillaires (6) possédant de préférence une section rectangulaire sont de 20 μm à 100 μm, de préférence de 0,5 μm à 3 μm.

**12.** Dispositif suivant l'une des revendications 6 à 11, caractérisé en ce que les capteurs de mesure (5) sont disposés dans les colonnes capillaires (6) ou sont intégrés dans celles-ci.

**13.** Dispositif suivant l'une des revendications 6 à 12, caractérisé en ce que les colonnes capillaires (6) sont guidées sur le substrat isolant (4) sous forme de méandres, de spirales, de doubles hélices ou bifilaires.

**14.** Dispositif suivant l'une des revendications 6 à 13, caractérisé en ce que la section de colonne capillaire est modifiée de façon continue ou discontinue sur la longueur de la colonne capillaire (6).

**15.** Dispositif suivant l'une des revendications 6 à 14 , caractérisé en ce que la colonne capillaire (6) est constituée d'un groupe de colonnes capillaires (6) en parallèle, juxtaposées et/ou superposées, et/ou présente des ramifications des différentes colonnes et/ou des convergences de plusieurs colonnes et/ou des liaisons des colonnes entre elles en vue du mélange ou de la séparation du produit à mesurer et/ou des phases mobiles (12).

**16.** Dispositif suivant l'une des revendications 6 à 15, caractérisé en ce qu'au moins deux systèmes de détection (10) sont disposés l'un derrière l'autre ou en ce qu'au moins deux dispositifs de chromatographie capillaire sont intégrés sur un substrat (7) isolant ou en ce qu'au moins deux dispositifs de chromatographie capillaire intégrés sont disposés l'un derrière l'autre.

**17.** Dispositif suivant l'une des revendications 6 à 16, caractérisé en ce que les colonnes capillaires (6), alimentées par au moins deux ouvertures ou chambres d'entrée différentes, convergent dans une colonne capillaire (6).

**18.** Dispositif suivant l'une des revendications 6 à 17, caractérisé en ce que les colonnes capillaires (6), alimentées par une ouverture ou chambre d'entrée, sont ramifiées et débouchent dans au moins deux systèmes de détection (10).

**19.** Dispositif suivant l'une des revendications 6 à 18, caractérisé en ce que des creux ou rainures (11) correspondant au parcours des parties bombées délimitant les colonnes capillaires (6) ont été obtenus par enlèvement de matière ou attaque au réactif sur le substrat (7).

FIG. 1a

FIG. 1b

FIG. 2a

FIG. 2b

FIG. 3a

FIG. 3b

FIG. 3c

FIG. 3d

FIG. 4